# DEMANDE DE BREVET EUROPEEN

(11) **EP 1 849 648 A1**
(43) Date de publication de la demande: **31.10.2007**
(21) Numéro de dépôt: 07290158.0
(22) Date de dépôt: 07.02.2007
(51) Int. Cl.: B60N 2/22, B60N 2/427

(54) **Structure de sécurité de siège de véhicule automobile**

(30) Priorité: 09.02.2006 FR 0601148
(71) Demandeur: Societe de Recherches d'Etudes et de Valorisation, 27180 Claville (FR)
(72) Inventeur: Eckendorff, Jean-Pierre, 27180 Claville (FR)
(74) Mandataire: Kessler, Michel

(57) **Abrégé**

Structure de sécurité de siège de véhicule automobile comportant, au niveau de l'axe d'articulation du dossier sur l'assise du siège, une barre centrale rigide (1) formant entretoise de l'assise du siège (8) caractérisé en ce qu'un tube concentrique (2) solidaire d'une structure rigide de protection du dossier (3, 3a) est emboîté sur la barre centrale (1), ledit tube concentrique (2) comportant une partie déformable (4) par vrillage sous l'action d'un effort de torsion transmis par la structure de protection du dossier (3,10), une extrémité (5) de cette partie déformable (4) étant rendue solidaire de la barre centrale rigide (1), l'autre extrémité (6) étant solidaire de la structure rigide (3, 3a) de protection du dossier. La partie déformable (4) du tube concentrique (2) peut être renforcée par son enveloppement, avec un faible jeu, dans un second tube concentrique externe (7) limitant les déformations radiales vers l'extérieur lors de son vrillage et permettant également d'augmenter sa raideur de vrillage. La barre centrale (1), ou une barre intérieure (29), permettront également de soutenir la partie (4) afin d'éviter sa déformation par rétrécissement radial.

## Description

La présente invention concerne une structure de sécurité de sièges de véhicules automobiles en cas de choc accidentel, par absorption progressive d'énergie par déformation d'une zône de plastification d'un élément structurel du siège, notamment au niveau de l'axe d'articulation du dossier sur le siège.

Un brevet WO 01/64470 au nom du même déposant et ayant le même inventeur concerne un siège de véhicule automobile adapté à recevoir une ceinture de sécurité et comportant une partie assise et une partie dossier de part et d'autre d'une zone d'articulation, chacune desdites parties comportant une armature avec deux bras, dans lequel ces deux bras formant respectivement les longerons d'assise et les montants de dossier ont leurs extrêmités montées chacune à rotation par l'intermédiaire d'un pivot dans un palier, un moyen d'absorption d'énergie étant prévu entre au moins un pivot et son palier correspondant. De tels sièges, qui combinent un règlage d'inclinaison de dossier continu et discontinu avec une grande sécurité d'amortissement en cas de choc accidentel conviennent particulièrement pour l'ensemble des sièges de véhicules automobiles, apportant ainsi la possibilité du meilleur règlage de position des occupants tout en préservant leur sécurité. De telles réalisations comportent toutefois des contraintes d'encombrement du dispositif auxquelles remèdient les structures objet de la présente invention.

La présente invention est une structure de siège simplifiée comportant un amortissement aux chocs par déformation plastique au niveau de l'articulation du dossier sur l'assise qui répond aux exigences de sécurité pour de tels sièges, lesquels peuvent ainsi être réalisés en unités autonomes indépendantes de la structure du véhicule. Ils peuvent comporter un mécanisme de règlage d'inclinaison de dossier simplifié et donc de moindre coût. Une telle structure conviendra particulièrement pour des sièges arrières qui peuvent généralement supporter des positions de règlage plus limitées, ou aucune lorsqu'ils sont solidaires de la structure du véhicule. Ils nécessitent des conditions de protection différentes contre les chocs, notamment en ce qui concerne les chocs additionnels de bagages contre l'arrière des dossiers qui constituent souvent le fond du compartiment bagages. Un mécanisme de règlage d'inclinaison de dossier en continu peut également être adapté à la structure selon l'invention.

Une structure de siège selon l'invention comportera, au niveau de l'axe d'articulation du dossier sur l'assise du siège, une barre centrale cylindrique rigide formant entretoise de l'assise du siège et sur laquelle est emboité, avec un léger jeu, une barre tubulaire concentrique solidaire d'une structure rigide de protection du dossier, une partie déformable par vrillage sous l'action d'un effort de torsion étant aménagée sur l'une de ces barres , une extrêmité de cette partie déformable étant rendue solidaire de la barre centrale rigide, l'autre extrêmité étant solidaire de la barre tubulaire solidaire de la structure rigide de protection du dossier dont le pivotement sous l'action d'un choc sera amorti par cette déformation en torsion.

Les efforts subis par cette structure rigide en cas de choc frontal du véhicule, transmis soit par l'ancrage supérieur d'une ceinture de sécurité dont elle est normalement équipée, soit plus directement pour des sièges arrières par le choc de bagages projetés contre le dossier, soit en cas de choc arrière par la mise en appui de l'occupant sur son dossier, seront ainsi amortis par la déformation en torsion de la partie déformable.

Lorsque la partie déformable est aménagée dans la barre tubulaire concentrique solidaire de l'armature du dossier, la progressivité de l'amortissement sera assurée par le vrillage en hélice de la partie déformable du tube concentrique, dont la forme tubulaire cylindrique sera maintenue par sa mise en appui directe sur la barre centrale rigide ou par l'intermédiaire d'un manchon de soutien, lui évitant toute déformation radiale due au vrillage telle qu'un pincement pouvant provoquer une chute de résistance à la torsion et une forte irrégularité d'amortissement. La barre centrale rigide sera préférentiellement de forme tubulaire, d'épaisseur combinant la rigidité nécessaire avec un moindre poids.

Le maintien de la forme cylindrique de la partie déformable du tube concentrique assurant une bonne régularité d'amortissement peut être renforcé par son enveloppement, avec un faible jeu, dans un second tube concentrique externe limitant les déformations radiales vers l'extérieur lors du vrillage et pouvant servir de manchon assurant un règlage de raideur progressive.

Le tube concentrique externe constituant la base du dossier pourra être emboité solidaire en rotation dans la structure du dossier par son extrêmité opposée à son ancrage sur la barre centrale rigide, notamment pour le cas de sièges arrières sans règlages d'inclinaison de dossier. Un règlage discontinu d'inclinaison de dossier, spécialement conçu pour résoudre de façon séparée et autonome le problème posé par le choc bagages, pourra également être prévu par un mécanisme à positions multiples de règlage solidaire des extrêmités de la barre centrale et pouvant pivoter, lors des changements de règlage d'inclinaison du dossier, dans des paliers aménagés dans la structure de l'assise du siège et centrés sur l'axe de la barre centrale, formant l'axe de pivotement du dossier. Toutefois, ce type de mécanisme a des dimensions tant en diamètre qu'en épaisseur telles qu'il pose des contraintes d'implantation dans certains sièges et notamment pour les banquettes arrière dites 1/3-2/3 destinées à recevoir trois passagers côte à côte.

Compte-tenu de l'évolution des règlementations et de la demande des constructeurs d'automobiles concernant les poids et les volumes des mécanismes, il devenait nécessaire de pouvoir les incorporer à l'intérieur d'un tube du plus petit diamètre possible sans aucune excroissance tant axiale que radiale tout en répondant aux exigences requises d'absorption d'énergie. La structure d'amortissement de chocs selon l'invention répond à ces exigences. Constituée à partir d'éléments tubulaires simples, elle pourra être réalisée dans des conditions économiques optimales, en fonction des efforts à amortir. Le dimensionnement des tubes en fonction de leur résistance mécanique et de leur traitement thermique permettra d'obtenir une structure de faibles poids et encombrement, aisément réalisable en grande série et d'un prix de revient réduit par rapport aux réalisations existantes.

Différents exemples de réalisation d'un dispositif de sécurité de siège selon l'invention seront décrits ci-aprés, en référence aux dessins annexés dont :
- La figure 1 représente en coupe axiale une structure d'amortissement selon l'invention pour un siège à ceinture embarquée, avec protection indépendante du choc arrière et du choc bagages,
- La figure 1A, montre une vue développée partielle de la surface interne du tube concentrique externe,
- La figure 1B, montre une vue développée partielle de la surface interne du manchon et les dispositions des butées de choc arrière et bagages prolongeant les rampes hélicoïdales de chocs arrière et bagages,
- les figures 1C et 1D montrent en vue développée partielle la disposition des nervures des noix d'assemblage entre des taquets en saillie du tube concentrique, ces noix ayant pour fonction d'immobiliser sans aucun jeu le tube concentrique sur la barre centrale,
- La figure 2 montre en coupe axiale un exemple de mécanisme de règlage discontinu pour un siège individuel,
- La figure 2A montre une section transversale d'une noix d'assemblage et les figures 2B, 2C et 2D, en vue développée partielle, la forme et l'emboitement de ses cannelures,
- La figure 3 montre en coupe axiale un exemple de mécanisme de règlage discontinu pour un siège individuel étudié pour le choc arrière et le choc bagages,
- La figure 3A, montre une vue développée partielle de la surface interne du manchon de raideur progressive,
- La figure 4 montre en coupe axiale un autre exemple de mécanisme de règlage discontinu pour un siège individuel, avec renvoi d'effort sur les deux paliers,
- La figure 5 montre une variante du mécanisme précédent, avec renvoi d'effort sur un seul palier, utilisant une structure d'amortissement par zône de plastification à raideur progressive aménagée dans la barre centrale rigide,
- La figure 6 montre en coupe axiale un exemple de mécanisme de règlage discontinu pour un siège individuel ayant un minimum d'élasticité de la barre 1 pour optimiser l'absorption d'énergie,
- La figure 7 montre en coupe axiale un exemple de mécanisme à règlage discontinu pour un siège à deux places dénommé banquette 2/3,
- La figure 8 montre en coupe axiale une variante du mécanisme représenté en figure 7 dans laquelle les deux parties déformables par vrillage et assurant l'absorption d'énergie sont disposées sur le tube concentrique,
- La figure 9 montre en coupe axiale une autre variante du mécanisme représenté en figure 7 conçue pour que le siège central puisse être équipé d'une poutre recevant le 3ème point d'attache embarqué d'une ceinture de sécurité,
- La figure 10 montre en coupe axiale une variante du mécanisme précédent décrit en figure 9 dans lequel un siège central 10A prévu pour être équipé d'une ceinture embarquée comporte deux zônes déformables par vrillage,
- La figure 11 montre en coupe axiale un exemple de mécanisme à réglage continu, conçu pour supporter le 3ème point embarqué d'une ceinture de sécurité,
- La figure 11A montre un exemple de mécanisme de règlage discontinu d'inclinaison de dossier pouvant être associé à la structure d'amortissement de chocs selon l'invention,
- La figure 11B montre en coupe axiale partielle l'assemblage de ce même mécanisme dans ladite structure au niveau d'un palier d'articulation du dossier de siège sur l'assise,
- Les figures 12 et 13, montrent en sections axiales et transversales les tubes mobiles et leurs manchons d'emboitement avec leurs reliefs de nervures et rampes hélicoïdales permettant d'obtenir une raideur progressive d'amortissement par plastification,
- La figure 14 montre une variante de fonctionnement du débrayage des noix et de leurs taquets respectifs d'immobilisation du tube concentrique.
- La figure 14A montre en perspective les noix correspondantes.
- La figure 15 montre en coupe axiale un exemple de mécanisme de règlage mixte.

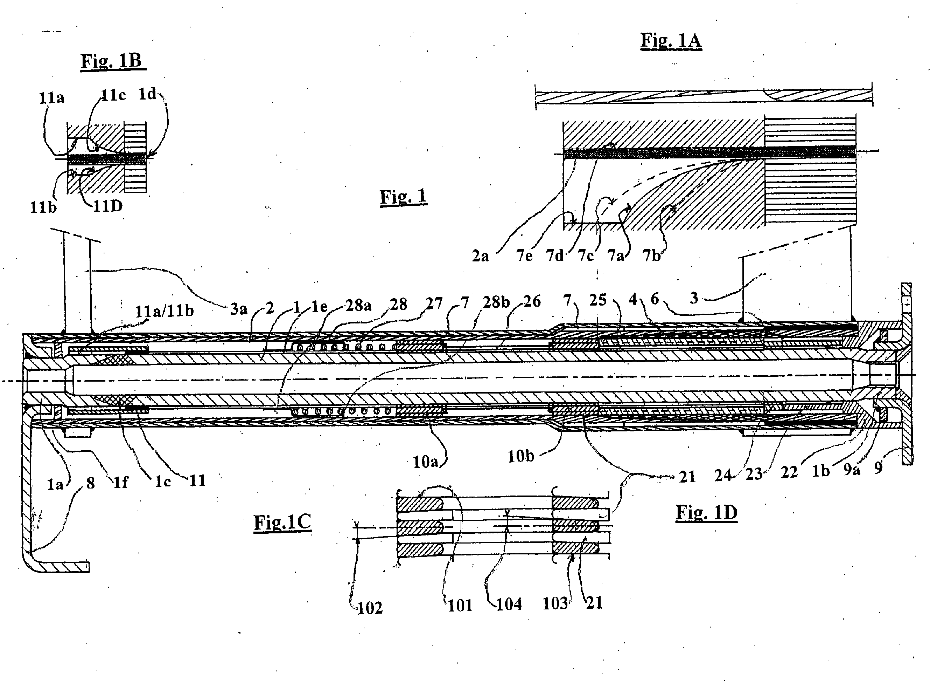

Sur la figure 1, une barre tubulaire centrale rigide 1, avec une extrêmité fixe 1a et une extrêmité mobile en rotation 1b, forme entretoise de l'assise du siège au niveau de l'axe d'articulation du dossier sur l'assise et répartit à parts égales les efforts transmis par le dossier sur deux paliers 8 et 9 de l'assise, le palier 8 étant fixe et le palier 9 et sa rondelle de renforcement 9a contrôlant une rotation prédéterminée de l'extrêmité 1b de la barre. Sur cette barre centrale 1 est emboité un tube concentrique 2 solidaire d'une structure rigide de protection du dossier comportant une poutre 3 recevant en extrêmité une fixation supérieure de ceinture de sécurité embarquée et un montant 3a de ladite structure.

Une structure de sécurité de siège de véhicule automobile selon l'invention comportera un tube concentrique 2 solidaire d'une structure rigide de protection du dossier 3, 3a et emboitée sur la barre centrale 1, une partie déformable 4 par vrillage sous l'action d'un effort de torsion étant aménagée sur l'une de ces barres , une extrêmité 5 de cette partie déformable étant rendue solidaire de la barre centrale rigide 1, l'autre extrêmité 6 étant solidaire du tube 2 solidaire de la structure rigide de protection du dossier 3, 3a dont le pivotement sous l'action d'un choc sera amorti par cette déformation en torsion de la partie déformable 4 du tube concentrique 2. Un manchon de soutien 25 évitera le rétrécissement radial de la partie 4 lors de sa mise en torsion.

Dans l'exemple de la figure 1, cette partie déformable 4 ayant pour fonction d'amortir un choc avant est également emboitée avec un léger jeu dans un tube concentrique externe 7 qui, tout comme le manchon de soutien 25 pour la partie interne, limitera les déformations radiales et donc les irrégularités d'efforts de vrillage, pour la surface externe de la partie déformable 4, dont les fibres génératrices initialement droites subiront ainsi un allongement régulier lors de leur mise en forme hélicoïdale par vrillage de la partie tubulaire déformable 4. La partie déformable en torsion 4 du tube concentrique 2 constituant la base du dossier est emboitée solidaire en rotation dans la structure du siège 3, 3a par son extrêmité 6 opposée à son extrêmité d'ancrage 5 sur la barre centrale rigide 1.

La liaison solidaire entre l'extrêmité 5 de la partie déformable 4 et la barre centrale rigide 1 sera avantageusement réalisée par des noix annulaires 10a, 10b emmanchées entre le tube 2 et la barre 1 par un assemblage à cannelures et taquets.

Dans cette configuration, la barre 1 est fixée, comme précédemment, aux longerons d'assise du siège par des brides à fixation radiale ou axiale. Le tube concentrique 2 est monté libre en rotation, centré sur une extrêmité par une rondelle 1f et sur l'autre extrêmité par une commande 22 de règlage d'inclinaison par câble ou manette (non représentés). La rotation de cette commande 22 pourvue de rampes hélicoïdales 23 se transforme en une poussée axiale de la barre 24 immobilisée en rotation par les cannelures 1e de la barre 1 et pourvue également de rampes hélicoïdales 23. Ce déplacement axial de la bague 24 provoquera le déplacement axial correspondant des noix de règlage 10a, 10b, qui, bloquées en rotation par les cannelures le sur la barre 1, assureront par le désengagement de leurs dentures externes des taquets 21 d'appui du tube 2, permettant la rotation de celui-ci et l'inclinaison de la structure de dossier 3 qui lui est solidaire. Un ressort d'appui 27 sur la noix 10a maintiendra le contact d'empilage des pièces tubulaires 26, 10b, 25 et 24 du mécanisme. Les noix de règlage de position 10a et 10b, qui assurent le lien entre la structure du dossier et la barre centrale rigide, seront situées à l'extrêmité correspondante 5 de la zône de plastification 4, à l'opposé de l'autre extrêmité 6 solidaire de la structure 3 du dossier.

Le tube 2 concentrique de la barre centrale 1 sera, comme elle, prévu indéformable, sauf pour une légère déformation élastique en torsion. Sa seule partie 4 sera rendue volontairement déformable de façon programmée par un traitement thermique approprié ou par une variation d'épaisseur limitée à cette zône. Le choc arrière et le choc bagages étant moins importants que le choc avant, il est prévu sur la barre 1 une zône de plastification 1c d'une raideur inférieure à celle de la partie déformable 4 du tube concentrique 2 amortissant le choc avant. Une rondelle 1f assure la concentricité du tube 2 sur l'extrêmité 1a de la barre centrale 1.

La barre centrale 1 dont les extrêmités 1a et 1b seront préférentiellement de forme hexagonale sera maintenue de façon fixe par son extrêmité 1a emboitée dans le palier 8 et son extrêmité 1b sera libre en rotation dans le palier 9 dans les limites de butées avant et arrière programmées. Afin d'éviter un risque d'éclatement du six pans femelle d'assemblage interne au palier 9 de l'extrêmité 1b, il est prévu une frette 9a de renforcement. Le six pans femelle du palier 9 aura en plus de sa fonction de butée avant et arrière une forme permettant son indexation angulaire de bonne position par rapport au six pans de la barre 1 garantissant son montage, cette forme étant prévue pour s'écraser lors de la torsion de la barre 1 sans gêner sa bonne mise en butée avant et arrière.

Pour le choc arrière, la butée angulaire dans le palier 9 sera prévue, par exemple à 20° pour permettre d'absorber l'énergie uniquement par la zône de plastification 1c équipée d'un manchon de raideur progressive 11 et d'une butée de fin de course 11a, par exemple à 22°, la barre 1 étant déjà retenue en torsion élastique dés 20° par sa mise en butée dans le palier 9.

Afin d'avoir le minimum d'élasticité parasite et d'absorber un maximum d'énergie par déformation plastique, le manchon de raideur progressive incorporé au tube extérieur 7 et entourant la partie déformable 4 retransmettra directement l'effort à une noix 10b, par la mise en appui du flanc 7d servant de butée sur la nervure 2a du tube 2, neutralisant ainsi l'élasticité de la zône 4 comme il apparait sur la figure 1A, montrant une vue développée partielle de la surface interne du tube concentrique externe 7.

Pour le choc bagages, la protection sera également assurée par la plastification de la zône 1c de la barre 1 précédée par une première mise en tension élastique obtenue par le déplacement angulaire d'environ 5° de l'extrêmité mobile 1b de la barre 1 dans le palier 9. La butée de fin de course 11b limitera à environ 10° le déplacement angulaire, maximum autorisé par la règlementation de sécurité.

Pour les chocs avant, afin d'adoucir la violence des chocs importants ainsi que pour les petits chocs, il est souhaitable d'obtenir une montée en charge progressive permettant notamment de mieux assurer la protection des personnes les plus légères. Comme pour le choc bagages, l'extrêmité mobile 1b de la barre 1 viendra en butée dans le palier 9 à environ 5° vers l'avant en montant en charge de façon progressive dans le domaine élastique et mettra en contrainte la zône de plastification 1c jusqu'à la mise en contact de la butée 11b sur la nervure 1d, comme il apparait sur la figure 1B, montrant une vue développée partielle de la surface interne du manchon 11 et les dispositions des butées de choc arrière et bagages 11a et 11b prolongeant les rampes hélicoïdales de chocs arrière et bagages 11c et 11d. Ceci a pour effet d'éliminer le point faible initial de la zône de plastification 1 c et de donner à la barre 1 sa raideur maximale permettant de transmettre directement le couple nécessaire à la plastification de la zône 4 et de reporter à part égales sur les deux paliers l'effort transmis par la poutre 3 au sommet de laquelle est ancré le point haut de la ceinture de sécurité.

En fonction de la violence du choc, la partie déformable 4 se vrillera plus ou moins. La raideur à la torsion de cette partie peut être programmée par la forme des rampes hélicoïdales 7a, 7b, 7c internes au manchon 7 de raideur progressive, comme indiqué sur la figure 1A, montrant une vue développée partielle de la surface interne du tube concentrique externe 7 formant manchon de raideur progressive et de butée de fin de course.

Les rampes hélicoïdales, au lieu d'avoir un angle d'hélice régulier, peuvent avoir un profil irrégulier agissant comme une came ou être décalées axialement par rapport à la zône 4 afin de solliciter toujours de façon progressive mais irrégulière les parties à raideur différente de la zône 4 de plastification. Il peut donc ainsi être obtenu une absorption d'énergie programmée protègeant efficacement l'occupant du siège de façon différenciée des trois types de chocs homologués précités.

Une butée de fin de course 7e venant en appui sur les nervures 2a externes au tube 2 est prévue pour que l'occupant du siège ne puisse dépasser, lors de l'inclinaison d'amortissement d'un choc, l'angle maximum admissible imposé par la réglementation.

Lors du fonctionnement du mécanisme selon l'invention, la commande de débrayage des noix 10a et 10b est assurée par une commande rotative radiale 22 prolongée en un manchon concentrique disposé entre la barre centrale 1 et le tube concentrique 2 et muni de rampes hélicoïdales 23, engrenées dans des rampes hélicoïdales correspondantes d'une bague de poussée 24 immobilisée en rotation par des cannelures droites 1e aménagées sur la surface externe de la barre 1. L'effort en rotation exercé par la commande 22 est transformé en poussée axiale par les rampes hélicoïdales 23 et assure le déplacement d'un manchon de soutien 25, lequel pousse la noix 10b ainsi que la noix 10a par l'intermédiaire de l'entretoise 26 interposée. Les deux noix sont donc simultanément dégagées de leurs taquets respectifs 21 faisant saillie à l'intérieur du tube 2 qui devient libre en rotation, permettant le règlage d'inclinaison du dossier 3.

Au repos, un ressort 27 maintient en compression engrenées dans leurs taquets respectifs 21 les noix 10a et 10b, par appui direct sur la noix ou par l'intermédiaire d'une entretoise de poussée 26, immobilisant ainsi, sans aucun jeu angulaire, le tube 2 sur la barre 1. Afin de limiter la course de déplacement des noix à une distance constante permettant aux rampes hélicoïdales de toujours être en prise, il est prévu une butée de fin de course 28b préférentiellement assurée par un fourreau 28 concentrique au ressort et assurant également le guidage du ressort et sa mise en appui.. Une rondelle élastique, non représentée, interposée entre la bague de poussée 24 et les autres pièces constituant le mécanisme assure le maintien en contact des rampes hélicoïdales.

Pour permettre le montage du sous-ensemble constitué par la barre 1 équipé de toutes les pièces constituant le mécanisme, et notamment les deux noix 10a et 10b, à l'intérieur du tube 2, les nervures de la noix 10b auront une largeur maximale permettant leur passage entre les taquets assurant le blocage de la noix 10a, tel que représenté sur les figures 1C et 1D. On garantit ainsi une bonne portée simultanée des flancs des nervures des deux noix dans les taquets du tube.

La noix 10a aura par exemple, dans le sens de son engagement dans ses taquets du tube 2, son flanc côté gauche 101 parallèle à l'axe de la barre 1 et son flanc côté droit 102 incliné, comme indiqué sur la figure 1C. La noix 10b, par contre, sera inversée et aura son flanc côté droit 103 parallèle à l'axe de la barre 1 et son flanc côté gauche 104 incliné comme indiqué sur la figure 1D. Cette disposition permet d'exercer deux poussées radiales opposées mettant les deux noix en contre-appui sur les cannelures de la barre 1 et d'annuler simultanément les jeux, tant sur la barre 1 que sur le tube 2.

Préférentiellement, il est prévu que les deux flancs, droit 101 et oblique 102, de la noix 10a soient engagés en appui dans leurs taquets ainsi que le seul flanc oblique 104 de la noix 10b, son flanc droit 103 parallèle à l'axe de la barre 1 étant légèrement en retrait de son taquet 21 afin de ne pas être tributaire de la distance séparant les deux noix. Le choc avant transmettant les plus grands efforts et nécessitant la sollicitation des deux noix, celles-ci ont été préférentiellement disposées pour que le flanc oblique 104 de la noix 10b soit en contact permanent avec les taquets du tube 2 dans le sens de l'effort du choc avant. Le léger jeu parallèle à la barre existant sur le flanc droit 103 de la noix 10b est sans incidence, la noix 10a à elle seule pouvant supporter le choc arrière avec son flanc oblique 102. Eventuellement, la mise en appui des deux noix sur leurs taquets pourrait être complétée si nécessaire par un élément élastique tel qu'une rondelle ondulée interposée entre les deux noix 10a et 10b.

La pression du ressort 27 s'arrête à la mise en appui des deux noix dans leurs taquets, ce qui définit la position maximale axiale d'emboitement de la noix 10b. Afin d'éviter un jeu angulaire générateur de bruit de la commande rotative 22, il convient d'interposer un élément élastique, non représenté, tel qu'une rondelle ondulée, entre la noix 10b et la bague de poussée 24 afin de la maintenir en contact permanent sur les rampes hélicoïdales de la commande rotative 22.

La liaison de la barre centrale 1 et du tube concentrique 2 peut être assurée par une seule noix pour le choc arrière et le choc bagages. Dans le cas du troisième point d'attache embarqué de la ceinture de sécurité, l'effort est d'environ le double et nécessite une noix deux fois plus longue, ce qui implique en matière de déplacement axial de doubler la longueur des rampes hélicoïdales 23 de la commande rotative 22 et de la bague de poussée 24, avec pour conséquence soit de doubler l'angle de rotation de la commande rotative 22, soit d'augmenter l'angle d'hélice des rampes hélicoïdales, avec une augmentation de l'effort sur la commande rotative 22 peu compatible avec sa fonction. Aussi, il sera donc prévu préférentiellement, dans le cas d'une ceinture de sécurité embarquée, deux noix fonctionnant en parallèle.

Le ressort 27 est immobilisé axialement par un fourreau 28 emboité à force sur la barre 1 et maintenu en position par son extrêmité 28a. Afin de limiter la course de déplacement de la noix 10a à une position constante permettant aux rampes hélicoïdales 23 d'être toujours en prise, il est prévu une butée de fin de course préférentiellement assurée par l'extrêmité 28b du fourreau 28.

Afin de réduire au maximum l'encombrement du mécanisme, notamment dans le sens de sa longueur, ce qui correspond à la largeur intérieure du véhicule, et de permettre sa fixation en bout sur une partie verticale de la structure du véhicule, telle que des ailes arrière ou dans l'angle de caisse ou directement, de façon fixe, sur le plancher ou sur une glissière interposée, la commande rotative 22 d'articulation du dossier à été prévue de façon radiale, disposée entre le mécanisme intérieur au tube 2 et le palier de fixation 9 situé à l'extrêmité de la barre 1. Cette commande radiale peut être assurée soit par un câble partiellement enroulé sur la commande rotative 22 et actionné par une poignée fixée par exemple au niveau de l'appui-tête, soit par une manette solidaire de la commande rotative 22 et directement implantée dans l'angle de l'assise et du dossier.

Différentes possibilités de verrouillage de la position du dossier peuvent être obtenues. Les taquets 21 précédemment décrits, par exemple disposés régulièrement espacés au nombre de 12, permettront un déplacement du dossier par pas de 30°. Pour une position dite standard d'inclinaison de moins 25° par rapport à la verticale, les positions de verrouillage du dossier seront de - 55° et - 85° vers l'arrière et vers l'avant de + 5°, + 35° et + 65°.

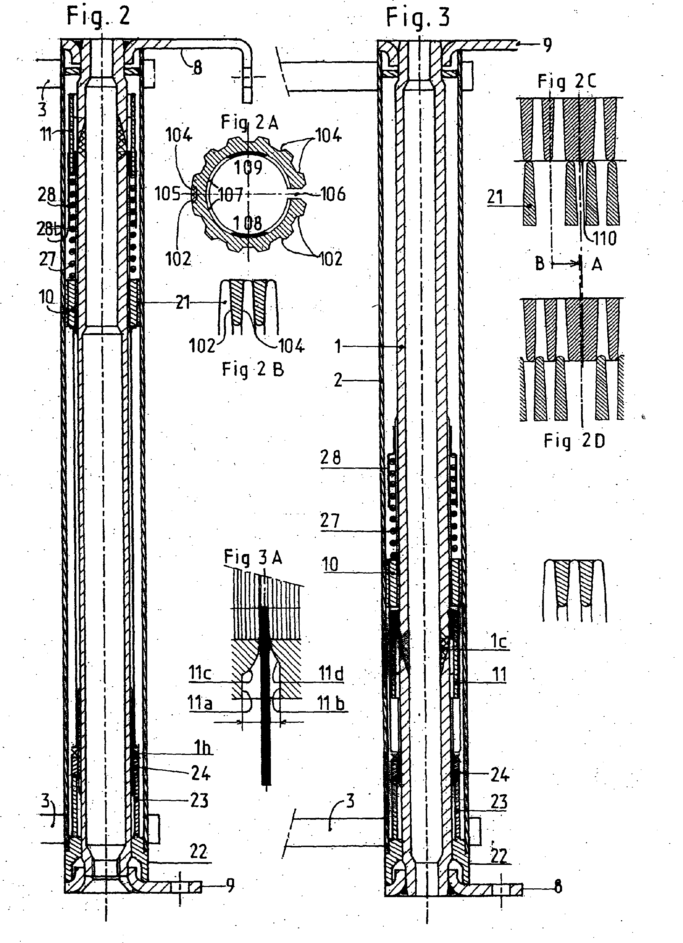

Il est également possible d'avoir une seule position de verrouillage à - 25° en supprimant un taquet 21 dans le tube 2 et en réunissant deux nervures de la noix par un apport de matière 105 entre leurs deux flancs 102/104 en vis-à-vis, tel que représenté en figure 2A, 2C et 2D. Cette solution permet de déverrouiller le mécanisme et, dés que le dossier est déplacé en avant ou en arrière, de relâcher le moyen de commande, l'extrêmité d'engagement des noix se déplace sur l'extrêmité d'engagement des taquets en glissant l'une sur l'autre sans pouvoir se verrouiller. Le dossier peut alors trouver sa bonne position, par exemple à plat pour former plancher, sans être tributaire du pas des taquets. Il suffit ensuite de relever le dossier pour que, de façon mémorisée, il retrouve sa position de verrouillage à -25° sans intervention sur le moyen de commande.

Une autre solution consiste à remplacer les taquets par des cannelures en relief à l'intérieur du tube 2. Comme pour les taquets, il est possible d'utiliser le principe de l'inclinaison oblique alternée pour neutraliser le jeu. Dans ce cas, il est possible de réduire le pas de déplacement du dossier à, par exemple, 8° entre chaque position de verrouillage et ce, à partir de la position de référence à - 25°.

La figure 2 montre en coupe axiale un exemple de mécanisme de règlage discontinu pour un siège individuel tel que décrit pour la figure 1, mais préférentiellement étudié pour le choc arrière et le choc bagages. Ce mécanisme est caractérisé par le fait qu'il reporte la totalité de l'effort, avec une élasticité minimale de la barre 1, uniquement sur le palier fixe 8 par la noix 10, à l'opposé de la commande 22, telle que représentée par sa section transversale de la figure 2A et ses nervures sur la figure 2B, 2C et 2D. L'effort à supporter par ce mécanisme ne nécessitant qu'une seule noix, il est nécessaire d'assurer l'immobilisation angulaire sans aucun jeu du tube 2 sur la barre 1. A cet effet, la noix 10 sera réalisée comme suit : Les flancs 102 et 104 de ses nervures seront obliques, comme décrit pour la figure 2B, un rebouchage 105 pourra si besoin est être fait entre deux flancs 102 et 104 en vis-à-vis de deux nervures et, par exemple, à 180°, la noix sera fendue en 106 afin de permettre sa déformation élastique.

La partie intérieure cannelée 107 engrenant sur les cannelures 1e de la barre 1 sera ovalisée afin d'assurer de façon prioritaire la portée des cannelures en 108 et 109 pour qu'elles soient en permanence sans jeu en contact à frottement glissant sur les cannelures 1e de la barre 1. Les flancs 102 et 104 obliques, d'au moins les deux premières nervures situées de part et d'autre de la fente 106, seront épaissis de façon à ce que leurs portées obliques en opposition exercent un effort de coincement de la noix 10 sur la barre 1 et les rendent prioritaires par rapport aux autres nervures afin d'assurer le ressèrement de la noix sur la barre 1 tout en annulant le jeu sur le tube 2.

La figure 2C représente la noix en position A fixe angulairement, correspondant à la face avant 110 reliant deux nervures, mais débrayée et maintenue en appui sur les taquets 21 en saillie sur le tube 2. Quelle que soit la position angulaire du tube 2 par rapport à la noix 10, la face 110 est toujours en appui sur au moins une extrêmité d'un taquet 21, sauf lorsque le tube 2 arrive en position angulaire A, tel que représenté sur la figure 2D, correspondant au taquet B supprimé, permettant à la noix de s'embrayer de façon automatique et mémorisée sous la poussée axiale du ressort 27. Ce fonctionnement peut s'appliquer à tous les modèles de noix. Le fourreau 28 est emboité sur le manchon de raideur progressive 11 qui sert de butée au ressort 27, sa partie 28b formant butée de déplacement axial de la noix 10.

La figure 3 montre en coupe axiale un exemple de mécanisme de règlage discontinu pour un siège individuel tel que décrit en référence aux figures 1 et 2, mais préférentiellement étudié pour le choc arrière et le choc bagages. Ce mécanisme reporte la totalité de l'effort avec une élasticité minimale de la barre 1 uniquement sur le palier fixe 8 accolé à la commande 22.

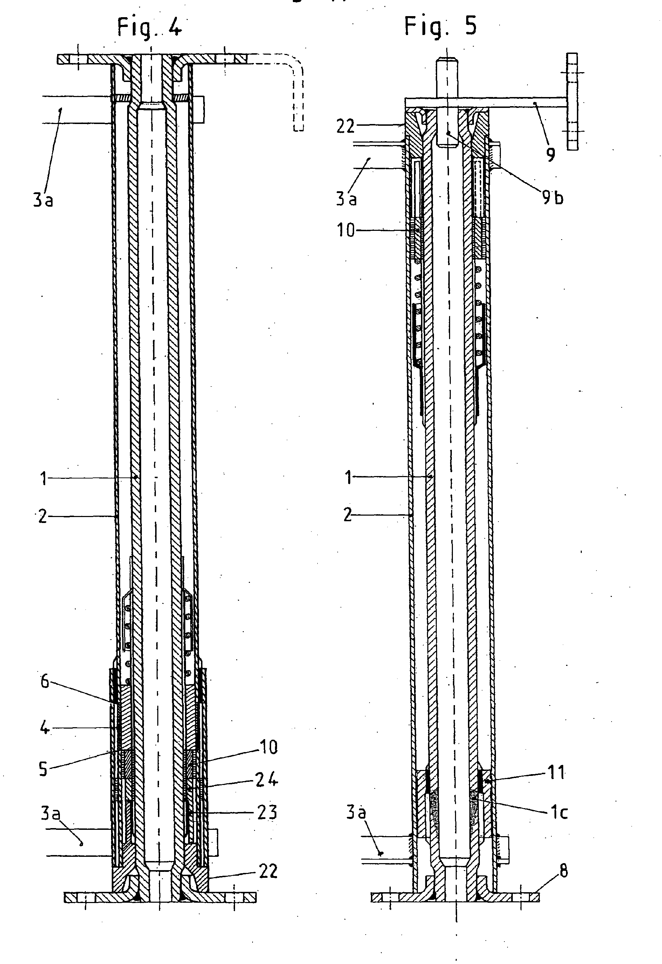

La figure 4 montre en coupe axiale un exemple de mécanisme de règlage discontinu pour un siège individuel dans lequel l'effort venant des deux montants 3a du dossier et reçu par le tube 2 est transféré à la barre 1 par l'intermédiaire de la partie déformable 4, tel que décrit pour la figure 1. Ce mécanisme a pour avantage de renvoyer l'effort sur les deux paliers et de pouvoir être utilisé tel que représenté avec une seule noix pour le choc arrière et le choc bagages, l'effort étant alors reporté en priorité sur le palier fixe côté commande et noix, ou en ajoutant une seconde noix pour le choc avant avec ceinture à 3ème point d'attache embarquée.

On retrouve , comme en figure 1, une barre centrale rigide 1, un tube concentrique 2 solidaire d'une structure rigide 3 de protection du dossier, ledit tube concentrique 2 comportant une partie déformable 4 par vrillage sous l'action d'un effort de torsion exercé par la structure 3 sous l'action d'un choc. Cette structure de sécurité de siège de véhicule automobile sera caractérisée en ce que le règlage d'inclinaison en discontinu de la structure du dossier 3, 3a est assuré par le déplacement axial d'une noix 10 annulaire et concentrique, sous l'action d'une commande rotative 22, cette noix 10 étant disposée dans le prolongement 5 de la zône déformable 4 par vrillage, à l'opposé de la partie 6 du tube concentrique 2 solidaire de la structure du dossier 3, 3a.

La figure 5 montre en coupe axiale une variante du mécanisme précédent, dans lequel la totalité de l'effort est reportée sur le palier fixe 8 et donnant priorité à l'élasticité. L'effort venant du tube 2 est directement transféré à la barre 1 par la noix 10. Compte-tenu de la distance maximale prévue entre la noix 10 et la zône de plastification 1 c située à l'autre extrêmité de la barre 1, ce mécanisme privilègie au maximum l'élasticité de la barre 1, l'effort étant en totalité renvoyé sur le palier fixe 8. La zône de plastification 1c est aménagée sur l'extrêmité fixe 8 opposée à la noix 10. Elle est obtenue par l'état écroui de la matière qui, à cet endroit, n'est que partiellement trempée. Ceci résulte de la variation de puissance et de la vitesse de défilement de la bobine d'induction qui se déplace axialement sur l'extérieur de la barre 1, et permet d'obtenir une zône de plastification à raideur progressive en fonction de l'épaisseur variable de la trempe de cette zône. Un manchon de raideur progressive 11 est rendu solidaire de la barre 1 à l'extrêmité de la zône de plastification. Ce manchon sert avantageusement de palier de centrage du tube 2 et forme un appui tournant pour la rotation lors des règlages de position d'inclinaison du dossier. La barre centrale tubulaire 1 a son extrêmité à la sortie de la zône de plastification 1c solidaire de la bride de fixation 8 à l'assise de flanc du siège. L'extrêmité opposée, qui reçoit le mécanisme de règlage d'inclinaison, est montée libre en rotation sur un moyen de centrage tel qu'un tourillon 9b solidaire de la structure de siège. Les chocs sur la structure de dossier 3 seront transmis au tube concentrique 2, à la noix de règlage 10 et à la partie de la barre centrale 1 non bloquée en rotation, dont la rotation par déformation de la zone de plastification 1 c assurera l'amortissement du choc.

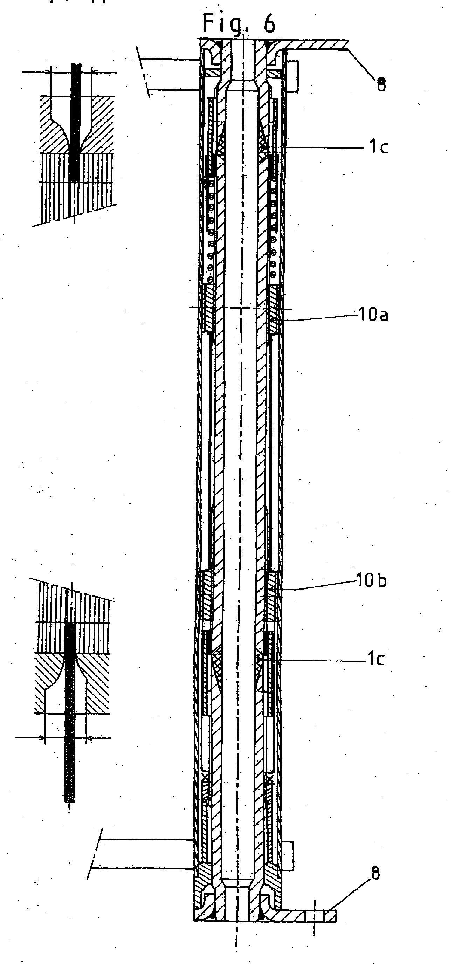

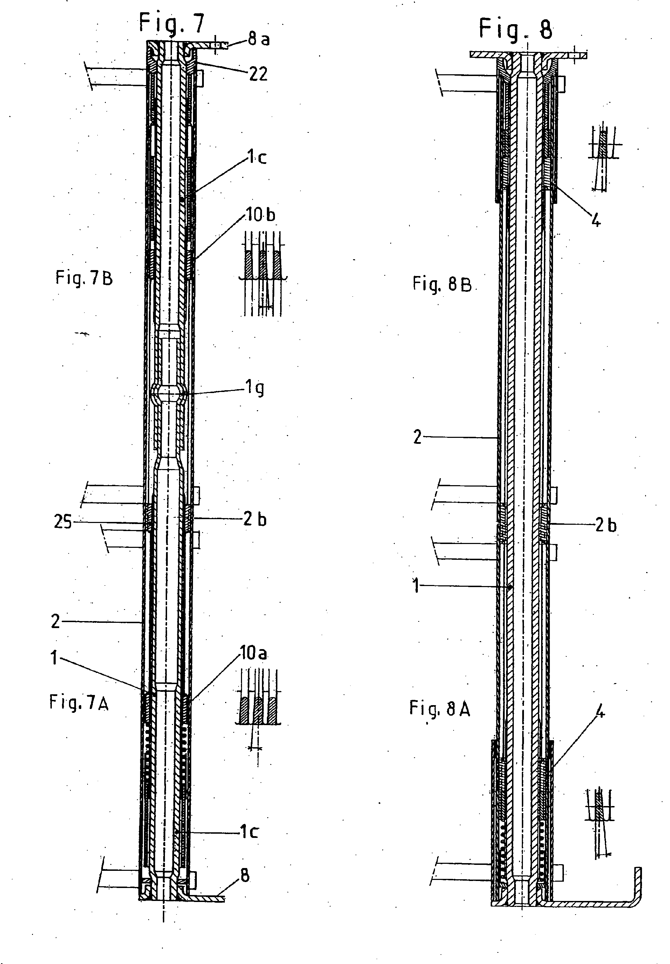

La figure 6 montre en coupe axiale un exemple de mécanisme de règlage discontinu pour un siège individuel ayant un minimum d'élasticité de la barre 1 pour optimiser l'absorption d'énergie. L'effort reçu de chaque montant du dossier est retransmis aux noix 10a et 10b disposées chacune au plus prés de leurs paliers fixes respectifs 8, avec un minimum d'élasticité en torsion de la barre 1. L'effort est réparti à part égale sur les deux paliers et cette disposition est particulièrement favorable à l'amortissement du choc arrière et du choc bagages.

Dans le cas du choc avant avec ceinture de sécurité à 3ème point d'attache embarqué, le montant de dossier le supportant peut être indifféremment implanté à droite ou à gauche. L'effort sera reçu par la noix située au plus prés de ce montant et transféré simultanément à la seconde noix par le tube 2 et la barre 1 avec un minimum d'élasticité, la barre répartissant par moitié cet effort sur chacune de ses deux extrêmités et donc à parts égales sur les deux paliers.

La figure 7 montre en coupe axiale un exemple de mécanisme à règlage discontinu pour un siège à deux places dénommé banquette 2/3, prévu préférentiellement pour le choc arrière et le choc bagages, dans lequel le mécanisme est incorporé dans un tube 2 de diamètre constant. Ce mécanisme permet, avec une seule commande pour les deux sièges, d'avoir deux fonctions d'amortissement totalement indépendantes correspondant à deux zônes de plastification 1c à chaque extrêmité de la barre 1 et protègeant chaque siège séparément. Le siège central, représenté en 7A, renvoie les efforts sur son palier 8, situé au centre du véhicule, le siège latéral 7B renvoie les efforts sur son palier 8a situé en bordure du véhicule du côté de la commande de règlage 22. Le fonctionnement de ce mécanisme est identique à celui représenté en figure 6, mais les efforts d'amortissement sont doubles et correspondent à ceux de deux sièges individuels tels que ceux représentés pour les figures 2 et 3.

Si le tube 2 est constitué d'une seule pièce, l'effort sur un seul siège sera retransmis aux deux paliers 8 et 8a par l'intermédiaire des deux zônes de plastification 1c faites pour la protection de deux passagers. Dans le cas d'un seul passager, la protection deux fois trop forte sera inefficace, l'amortissement de plastification absorbant l'énergie n'ayant pas lieu par excés de rigidité. La fonction d'amortissement indépendante pour chaque siège est obtenue en séparant le tube 2 en deux tronçons reliés par une saignée d'affaiblissement 2b ayant pour but de se rompre afin de permettre à l'un ou l'autre des tronçons de pivoter si un seul siège est occupé. Il en est de même pour la barre 1 dont chacun des tronçons devra pouvoir pivoter et plastifier de façon indépendante sans être retenu par la zône de plastification de l'autre tronçon.

La barre 1, en plus de sa fonction d'absorption d'énergie, a pour fonction de maintenir l'écartement du siège et de résister à des efforts latéraux importants en cas d'accident. Il n'est donc pas souhaitable, comme pour le tube 2, de prévoir une zône de rupture. Un amincissement de la paroi permettant un vrillage avec un faible couple ne perturbant pas l'absorption d'énergie ne permettrait pas de garantir la solidité nécessaire. Préférentiellement, la barre 1 sera divisée en deux tronçons raccordés par une rotule 1g permettant de les maintenir dans un même alignement tout en pouvant pivoter l'un par rapport à l'autre en assurant un écartement constant en garantissant une résistance axiale suffisante contre un choc latéral. Un manchon de soutien 25 centré sous la saignée d'affaiblissement 2b du tube 2 assurera une liaison radiale avec la barre 1.

Les tronçons 7A et 7B de la barre 1 doivent être angulairement en parfaite concordance de façon à ce que la position angulaire des noix corresponde bien à la position des taquets dans le tube. Aprés sertissage de la rotule 1g et mise en concordance des tronçons 7A-7B, il sera réalisé une immobilisation angulaire prévue pour se rompre sous un couple identique à celui de la saignée d'affaiblissement 2b du tube 2. A titre d'exemple, ceci pourra être obtenu par un ou deux points de soudure calibrés, une goupille travaillant en cisaillement, un enfoncement local déformant partiellement la barre etc...

La figure 8 montre en coupe axiale une variante du mécanisme représenté en figure 7 dans laquelle les deux parties 4 déformables par vrillage et assurant l'absorption d'énergie du choc arrière et du choc bagage des sièges 8A et 8B sont disposées sur le tube 2. Cette disposition permet d'avoir une barre centrale 1 rigide et en une seule pièce renvoyant indifféremment l'effort d'amortissement de l'un ou l'autre des deux sièges simultanément sur les deux paliers. Comme pour le cas de la figure 7, afin d'assurer l'indépendance d'amortissement des deux sièges, le tube 2 sera divisé en deux tronçons séparés par une saignée d'affaiblissement 2b.

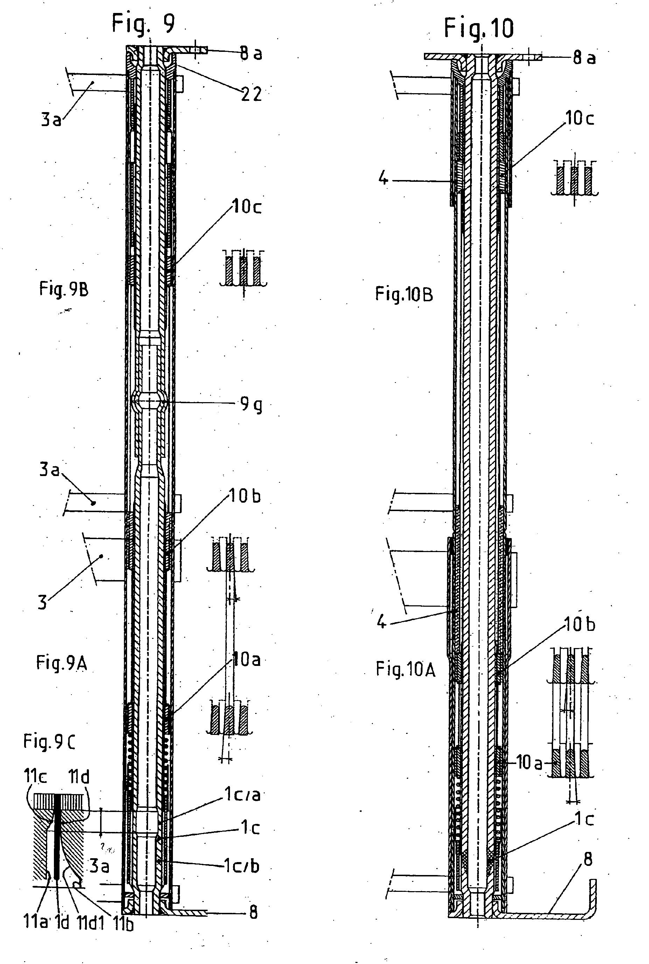

La figure 9 montre en coupe axiale une autre variante du mécanisme représenté en figure 7 conçue pour que le siège central représenté en 9A puisse être équipé d'une poutre 3 recevant le 3ème point d'attache embarqué d'une ceinture de sécurité. Le tube 2 est conçu en deux tronçons se séparant en cas d'accident, la barre 1 comporte deux tronçons raccordés par une rotule 1g, les efforts étant renvoyés par le siège 9A sur son palier 8 et le siège 9B sur son palier 8a. Le tronçon de la barre 1 supportant le dossier du siège 9A est équipé de la noix 10b placée à l'aplomb de la poutre 3 pour renvoyer directement de façon radiale l'effort à la barre 1 et le complément de résistance nécessaire est assuré par la noix 10a pour supporter l'attache du 3ème point embarqué sur la poutre 3.

La partie déformable 1c doit assurer de façon spécifique la protection du choc avant, beaucoup plus important que le choc arrière ou le choc bagages. A cet effet, elle est composée, afin d'assurer l'indépendance d'amortissement des différents chocs, de deux zônes de plastification 1c/a et 1c/b accolées bout à bout et prévues chacune pour absorber de façon différenciée l'énergie correspondante à chaque type de choc concerné. Pour le choc arrière, les flancs 11c des rampes hélicoïdales, tels que représentés en vue développée partielle 9C, prennent appui sur les nervures 1d contrôlant la plastification de la zône 1c/a jusqu'à la fin de course assurée par la butée 11a. Pour le choc bagages, les flancs 11d des rampes hélicoïdales tels que représentés en 9C, prennent appui sur les nervures 1d contrôlant la plastification de la zône 1c/a jusqu'à la fin de course assurée par la zône 1c/b, plus résistante.

Pour le choc avant, beaucoup plus important que le choc bagages, la montée en charge progressive sera assurée par la zône de plastification 1c/a du choc bagages, qui sera ensuite neutralisée par les nervures 1d, telles que représentées sur la vue développée partielle 9C. Ceci permettra la plastification de la zône 1c/b, jusquà la fin de course assurée par la butée 11b.

L'immobilisation sans jeu angulaire du tube 2 sur la barre 1 est assurée par les noix 10a et 10b telles que décrites pour la figure 1. La partie de la barre 1 correspondant à la zône 9B est maintenue dans sa bonne position angulaire par la noix 10c solidaire du tube 2. Les deux flancs de chacune des nervures de cette noix 10c sont parallèles à l'axe de la barre 1, tels que représentés sur la vue développée partielle 9B et leur écartement maximum permet leur passage entre les flancs des taquets recevant les noix 10a et 10b de façon que la barre 1 puisse être équipée de la totalité des pièces constituant le mécanisme à l'exception de la commande rotative 22.

Ainsi équipée, la barre constitue un sous-ensemble qui peut être introduit dans le tube 2. La commande rotative 22 ainsi que le palier 8a peuvent alors être mis en place pour permettre l'assemblage définitif du mécanisme.

La fixation de la poutre 3 sur le tube 2 pourra être assurée par un étrier 3b épousant la forme du tube et soudé sur 180° à l'opposé de la poutre 3, les deux bras de l'étrier remontant le long de la poutre 3 seront préférentiellement soudés sur ses quatre angles pour ne pas détremper les faces situées entre les angles. La forme des bras de l'étrier pourra être aménagée de façon débordante sur au moins un côté de la poutre afin d'augmenter la rigidité latérale de sa fixation sur le tube 2.

La figure 10 montre en coupe axiale une variante du mécanisme précédent décrit en figure 9 dans lequel un siège central 10A prévu pour être équipé d'une ceinture embarquée comporte une zône déformable par vrillage 4, assurant l'absorption d'énergie, disposée sur le tube 2. L'absorption d'énergie pour le siège 10A est identique à celle décrite dans le cas de la figure 1. Cette disposition permet d'avoir une barre 1 rigide en une seule pièce renvoyant indifféremment l'effort de l'un ou l'autre des deux sièges simultanément sur les deux paliers. Comme pour la figure 9, afin d'assurer l'indépendance des deux sièges, le tube 2 sera divisé en deux tronçons séparés par une saignée d'affaiblissement 2b.

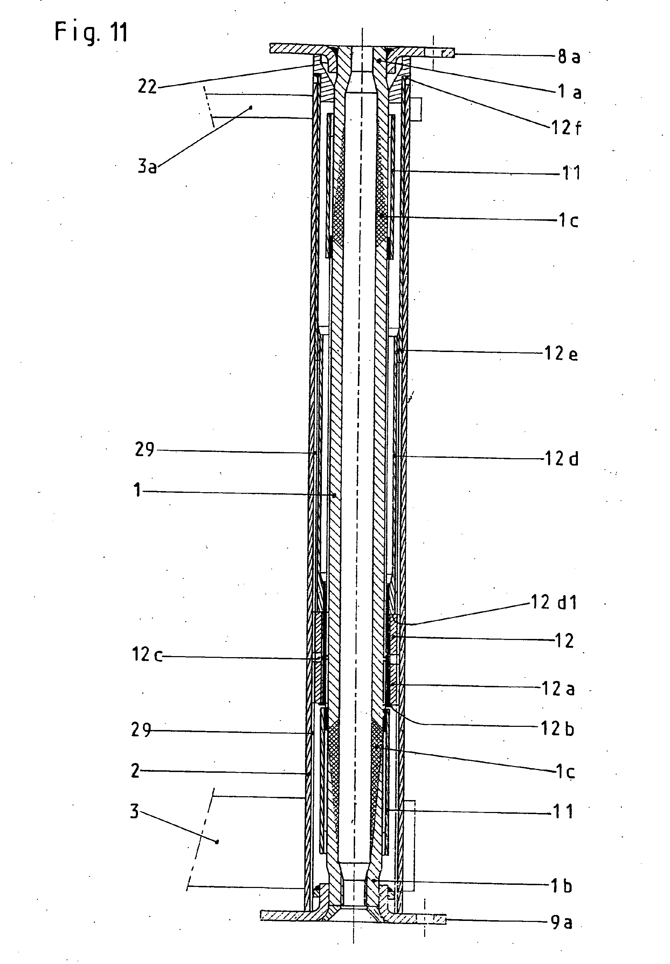

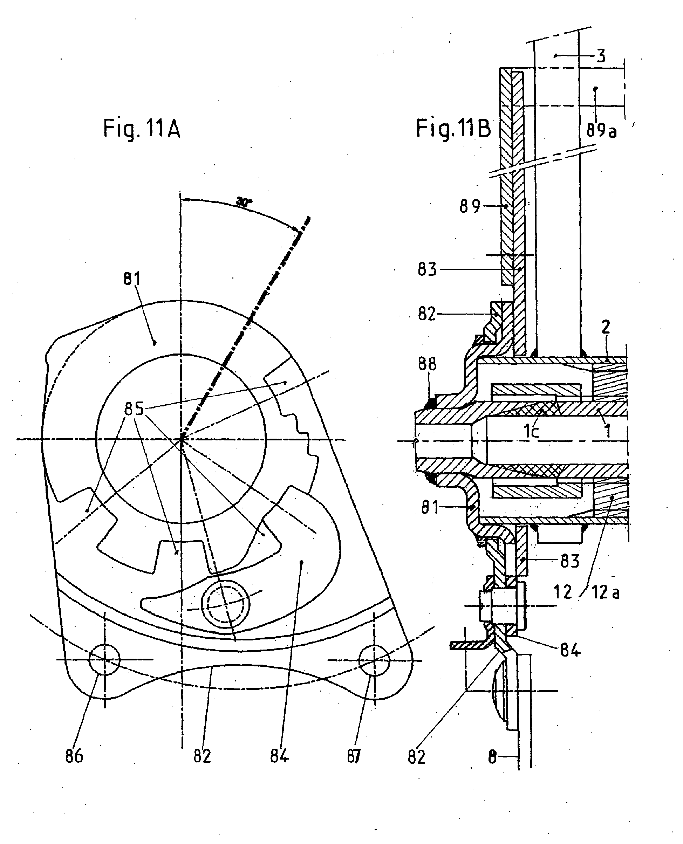

La figure 11 montre en coupe axiale un exemple de mécanisme à réglage continu, conçu pour supporter le 3ème point embarqué d'une ceinture de sécurité, la barre et les zônes de plastification pouvant être allègées dans le cas d'un siège ne comportant pas une telle ceinture. Il comporte, dans le cas d'une telle ceinture à 3ème point embarqué, deux zônes de plastification 1c situées aux extrêmités de la barre centrale 1, équipées de manchons 11 de raideur progressive permettant, comme décrit pour les exemples précédents, d'adapter la raideur d'amortissement à la violence des chocs arrières, bagages et avant, en l'associant ou non à une mise en contrainte avant ou arrière de la barre 1 par l'intermédiaire de son extrêmité mobile 1b dans le palier 9a.

Ce mécanisme est caractérisé par sa double noix 12-12a permettant d'annuler par écartement le jeu du tube 2 sur la barre 1 tel que décrit à la figure 11 du brevet français 04.08709 précité, la noix étant commandée par une vis tubulaire 12d soudée sur au moins un, mais préférentiellement deux goujons 12b, les deux noix étant maintenues en écartement par un élément élastique 12c, tel qu'une rondelle ondulée, les mettant simultanément en appui sous la tête des goujons et sur la face 12d1 de la vis tubulaire 12d.

Le déplacement axial des noix 12 et 12a est assuré par la rotation de la bague à commande radiale 22 sur laquelle est soudée l'extrêmité 12f opposée à l'autre extrêmité 12e supportant l'écrou et l'immobilisant axialement, la mise en rotation de l'écrou assurant le déplacement axial de la vis 12d et donc des noix 12 et 12a. La commande radiale 22 peut être équipée d'un moyen d'entraînement en rotation, soit manuel, du type manette à cliquets réversibles, appelée également "manette de pompage", soit motorisé du type couronne dentée entraînée par vis sans fin. Afin de réduire les efforts de frottement en fonctionnement normal, lors du règlage de la position du dossier, les deux noix 12 et 12a auront préférentiellement deux nervures plus larges disposées à 180° et dont les flancs porteront de façon prioritaire sur deux rampes hélicoïdales 29 du tube 2, pour le règlage avant ou le règlage arrière.

Ce mécanisme continu peut être complété par son association à un mécanisme discontinu suivant l'exemple des figures 11A et 11 B. De tels mécanismes de positionnement rapide d'inclinaison de dossier par règlage discontinu au moyen d'un cliquet escamotable de verrouillage ont été décrits par exemple dans le brevet N° 05.05628 concernant un "mécanisme de positionnement rapide d'inclinaison d'un dossier de siège" au nom de la demanderesse.

Dans de tels mécanismes, comme il apparait dans l'exemple des figure 11A et 11B, l'extrêmité de la barre 1 n'est plus directement solidaire du flanc 8 du siège mais reçoit une platine circulaire 81 montée libre en rotation dans un palier fixe 82 fixé au flanc d'assise du siège 8 par des attaches 86 et 87. La périphérie de la platine 81 comporte des encoches 85 dont le blocage par un cliquet de verrouillage 84 correspondra aux différentes positions d'inclinaison souhaitées pour le dossier du siège, position standard, position avancée, position tablette, position couchette... Une telle structure de sécurité de siège de véhicule automobile sera caractérisée en ce que le règlage d'inclinaison de dossier est assuré par un mécanisme de règlage 81, 83, 84 solidaire des extrêmités de la barre centrale 1 et pivotant, lors des changements de règlage d'inclinaison du dossier, dans des paliers 82 aménagés dans la structure 8 de l'assise du siège et centrés sur l'axe de la barre centrale formant l'axe de pivotement du dossier.

Ce mécanisme comprend une protection du choc bagages qui suit le mouvement du dossier en fonctionnement normal, mais qui, en cas de choc avant, reste immobilisé à la position de verrouillage du dossier, par exemple la position standard -25°, le dossier se déplaçant seul, entraîné par le 3ème point embarqué de la ceinture de sécurité.

Sur la figure 11B montrant une section axiale du mécanisme de la figure 11A, la barre centrale 1 reste fixée, par exemple par une soudure 88, sur la platine 81 formant palier orientable pouvant pivoter dans un orifice correpondant du palier fixe 82. La platine 81 et son cliquet de blocage 84 sont calés latéralement, en sandwich, d'une part contre le palier fixe 82, d'autre part contre une joue 83, solidaire de la platine 81 et assurant l'immobilisation latérale du cliquet 84. Dans le même plan et la même épaisseur que la platine 81 il est prévu un bras de protection 89 articulé sur la joue 83, en butée vers l'avant pour retenir le choc bagages et mobile en rotation vers l'arrière pour s'escamoter et permettre au dossier de pivoter en cas de choc arrière. Une barrière de protection 89a est fixée sur les bras de protection 89 solidaires des mécanismes.

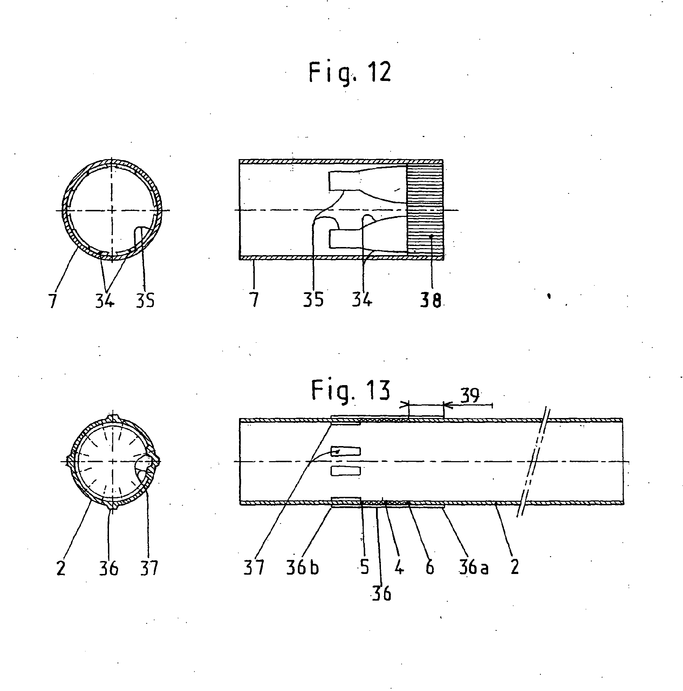

La figure 12 montre en coupe axiale et transversale un manchon du type décrit en figure 4. Ce manchon 7, solidaire de la structure 3 du dossier, comporte une zône cannelée 38 s'emboitant sur une zône cannelée correspondante 39 du tube 2 et assurant la fixation du manchon sur le tube 2, en bordure 6 de la zône de plastification 4, et prolongée par un jeu de, par exemple, quatre rampes hélicoïdales 34 couvrant la zône de plastification 4 du tube 2 et se terminant par des butées avant et arrière 35. Les rampes hélicoïdales 34 viennent en appui contre des nervures correspondantes 36 du tube concentrique 2, comme indiqué figure 13. Les nervures 36, disposées sur le tube 2, se prolongent au delà de l'extrêmité opposée 5 de la zône de plastification 4 et constituent des butées de fin de course de torsion de l'amortissement à raideur progressive par plastification, obtenu par la surface de contact progressif des rampes hélicoïdales 34 sur les nervures 36. Préférentiellement, les butées 35 sont disposées à l'aplomb des taquets 37 de façon à transmettre l'effort de façon radiale directement à la barre.

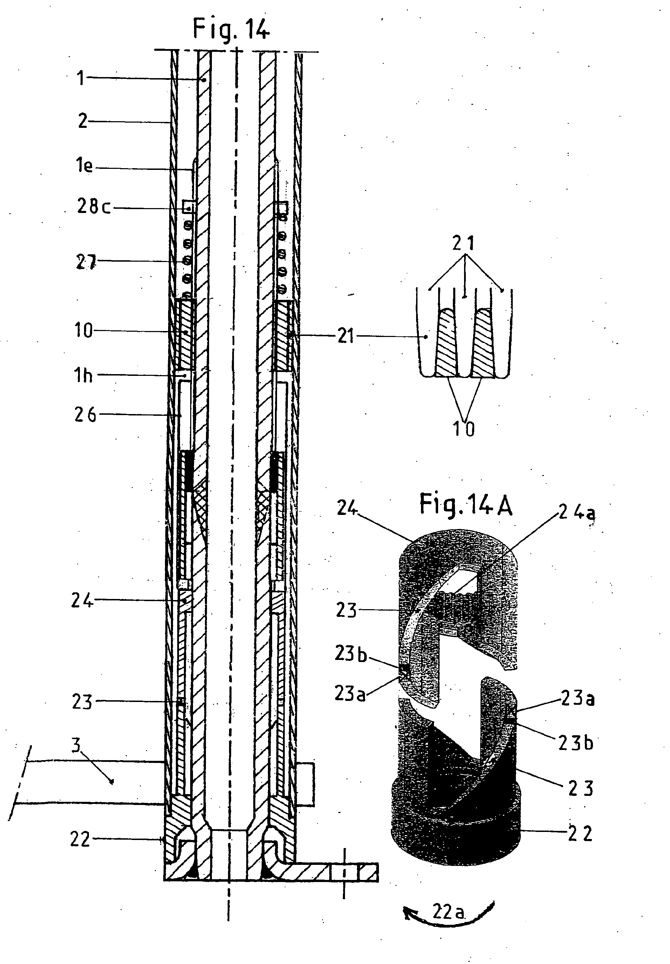

La figure 14 montre une variante de fonctionnement du débrayage des noix 10, 10a, 10b et 10c de leurs taquets respectifs 21 d'immobilisation du tube 2. Le fonctionnement des rampes hélicoïdales 23 est inversé et les noix sont emboîtées dans les taquets 21 par la poussée des des rampes hélicoïdales 23, et non du ressort 27, qui assureront le débrayage des noix. En position de débrayage, les rampes hélicoïdales 23 en vis-à-vis seront engagées sur toute leur longueur. La commande rotative 22 équipée d'un ressort de rappel permanent dans le sens de la flèche 22a est pourvue de rampes hélicoïdales 23 en appui sur les rampes hélicoïdales 23 de la bague de poussée 24. La bague 24, immobilisée en rotation par ses cannelures 24a coulissantes sur les cannelures 1e de la barre 1 se déplace axialement sous l'effet de rotation de la commande 22.

Le déplacement de la manette de commande de rotation de la bague 22 est limité angulairement par les butées 23a parallèles à l'axe de la barre 1 et prévues à l'extrêmité des rampes hélicoïdales de la commande 22 et de la bague 24. Des butées 23b de retenue axiale, perpendiculaires à l'axe de la barre 1, assurent le verrouillage du mécanisme. Ces mises en butée angulaire 23a, maintenue par la pression du ressort de rappel 22a et en butée axiale 23b correspondent à la position de repos de la manette de commande et permettent d'être assuré que la ou les noix sont totalement engagées et verrouillées dans leurs taquets 21.

La poussée de la bague 22 sur la noix 10 est faite par l'entretoise 26, une rondelle élastique 1h de rattrappage des jeux d'assemblage est interposée entre la bague 22 et la noix 10 pour assurer le contact des flancs des nervures de la noix 10 sur les flancs des taquets 21. Le ressort 27 est mis en appui sur une rondelle 28c emboîtée à la presse sur les cannelures 1e de l'arbre 1. L'effort exercé par le ressort de rappel 22a est transformé en une poussée axiale sur la bague 24, plus importante que l'effort exercé par le ressort 27 sur la noix 10, de façon à ce que le mécanisme embraye automatiquement les noix 10 dans ses taquets 21 lorsque les butées axiales 23b ne sont plus en vis-à-vis. Les poussées des deux ressorts étant en opposition, l'effort exercé sur la manette de commande correspond à la différence des poussées exercées par les ressorts 22a et 27.

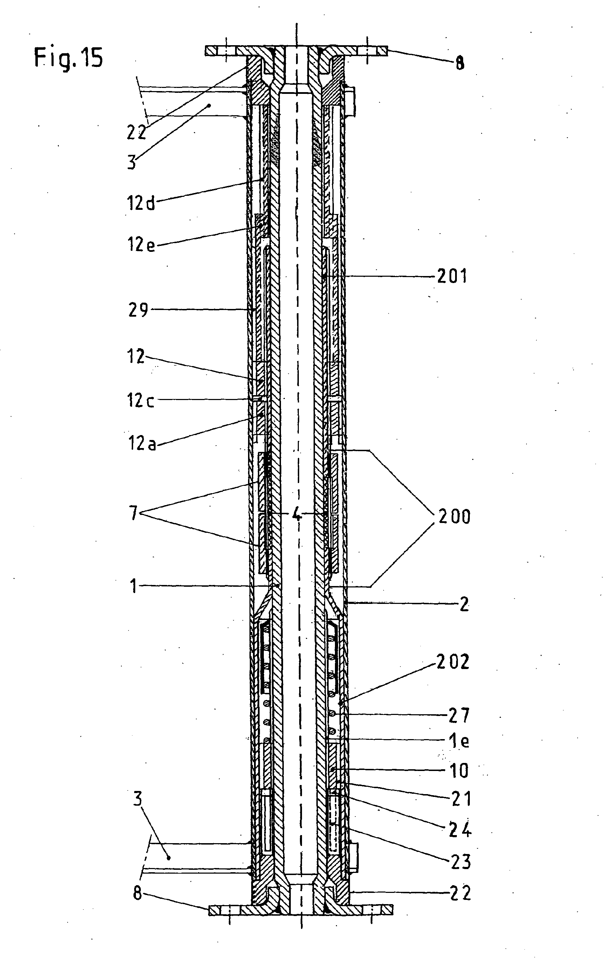

La figure 15 montre en coupe axiale un exemple de mécanisme de règlage mixte composé d'un mécanisme discontinu et d'un mécanisme continu, y compris leurs différentes variantes, tels que décrits précédemment. Ce mécanisme mixte est caractérisé en ce que les deux mécanismes le composant sont concentriques et commandés de façon radiale, l'un d'un côté du siège et l'autre du côté opposé.

Le tube d'accouplement 200 reporte l'effort, transmis par la structure du dossier 3 au tube 2, par l'intermédiaire des noix de l'un de ces deux mécanismes, sur les noix de l'autre mécanisme, l'absorption d'énergie pouvant être prévue indifféremment sur le tube concentrique 2, le tube d'accouplement 200 ou la barre centrale 1. Le mécanisme représenté à titre d'exemple transmet les efforts des deux montants 3 du dossier au tube 2, dont les rampes hélicoïdales internes 29, engagées dans les rainures hélicoïdales externes correspondantes des deux noix 12, 12a, transmettent l'effort par leurs cannelures internes, coulissant sur les cannelures externes 201 du tube d'accouplement 200.

L'absorption d'énergie est assurée par la zône déformable par vrillage 4, qui retransmet l'effort résiduel à la partie 202 comprenant des taquets internes 21 en appui sur les nervures de la bague 10 immobilisée en rotation par les cannelures 1e de la barre 1, immobilisée par au moins une de ses extrêmités dans son palier correspondant, l'autre extrêmité pouvant être fixe ou partiellement mobile dans son palier.

Le mécanisme selon l'invention pourra être utilisé dans sa partie mobile, notamment en extrêmité, selon son degré de mise en torsion à la suite d'une variation d'inclinaison non contrôlée du dossier de siège en cas d'accident, pour déclencher automatiquement une assise articulée du siège, dite "d'anti-sous-marinage", relevant le siège par un moyen mécanique tel qu'une articulation à ressort et empêchant ainsi le glissement de l'occupant le long du siège vers l'avant, et/ou un mécanisme de pré-tensionnement de ceinture, de basculement avant de l'appui-tête ou de la partie haute du dossier ou simultanément des deux s'ils ne font qu'un, en cas de choc arrière ainsi que toutes autres fonctions auxiliaires de protection contre des chocs avant ou arrière.

A cet effet, une pièce rapportée sera fixée sur l'extrêmité de la barre ou du tube, limitant en rotation le déplacement angulaire d'environ 5° en avant et en arrière, cette pièce étant munie d'un bras déclencheur sera entraînée en rotation dans un palier sous l'action d'un choc ayant déclenché la rotation du mécanisme, assurant le déclenchement des dispositifs auxiliaires de protection qu'elle a pour fonction d'activer.

Le mécanisme selon l'invention permet également de recevoir, par fixation au milieu du tube entretoise, des dossiers de sièges à colonne unique axiale, à règlage télescopique de hauteur et surmontées d'une armature d'appui-tête recevant l'attache haute de la ceinture de sécurité. Cette colonne a alors l'avantage de transmettre les efforts directement au niveau du mécanisme. Une telle structure, en plus de sa réduction de poids par rapport aux cadres classiques de dossiers, a l'avantage de laisser toute liberté de design du dossier auquel elle s'applique. L'espace de part et d'autre de la colonne peut être laissé libre, ce qui augmente la place disponible à l'arrière du siège

Le mécanisme a structure tubulaire objet de l'invention permet donc d'assurer un amortissement de sécurité efficace, car indéréglable, contre les chocs avant et arrière transmis aux sièges et à leurs occupants, tout en permettant toutes adaptations et règlages des dossiers de sièges par des moyens simples et de faible coût, poids et encombrement, adaptables à tous types de véhicules.

## Revendications

1. Structure de sécurité de siège de véhicule automobile comportant, au niveau de l'axe d'articulation du dossier sur l'assise du siège, une barre centrale rigide (1) formant entretoise de l'assise du siège **caractérisé en ce qu'**une barre tubulaire concentrique (2) solidaire d'une structure rigide de protection du dossier (3,3a) est emboîtée sur la barre centrale (1), une partie déformable (4) par vrillage sous l'action d'un effort de torsion étant aménagée sur l'une de ces barres , une extrêmité (5) de cette partie déformable étant rendue solidaire de la barre centrale rigide (1), l'autre extrêmité (6) étant solidaire de la barre tubulaire concentrique (2) solidaire de la structure rigide de protection du dossier (3, 3a).

2. Structure de sécurité de siège de véhicule automobile selon la revendication 1 **caractérisée en ce que** la liaison solidaire entre l'extrêmité (5) de la partie déformable (4) et la barre centrale rigide (1) est réalisée par au moins une noix annulaire (10, 10a, 10b, 12, 12a) coulissant entre le tube (2) et la barre (1) sur un attelage à cannelures (1e), taquets (21) et rampes hélicoïdales (29).

3. Structure de sécurité de siège de véhicule automobile suivant les revendications 1 et 2 **caractérisée en ce que** le tube concentrique (2) comporte la partie déformable (4) renforcée par son enveloppement, avec un faible jeu, dans un second tube concentrique externe (7) limitant les déformations radiales de vrillage vers l'extérieur.

4. Structure de sécurité de siège de véhicule automobile suivant les revendications 1, 2 et 3 **caractérisée en ce que** la partie déformable en torsion (4) du tube concentrique (2) constituant la base du dossier est emboîtée solidaire en rotation dans la structure du siège (3, 3a) par son extrêmité (6) opposée à son extrêmité d'ancrage (5) sur la barre centrale rigide (1) et supportée par un manchon de soutien (25) évitant son rétrécissement radial..

5. Structure de sécurité de siège de véhicule automobile suivant les revendications 1, 2, 3 et 4 **caractérisée en ce que** le tube (2) concentrique de la barre centrale (1), est prévu indéformable plastiquement par un traitement thermique, sauf pour une partie (4) restée plastiquement déformable par son état d'origine recuit.

6. Structure de sécurité de siège de véhicule automobile suivant les revendications 1, 2, 3, 4 et 5 **caractérisée en ce qu'**une structure rigide de protection du dossier (3) est constituée d'un montant (3) à l'extrêmité supérieure (3d) duquel est fixé l'ancrage supérieur d'une ceinture de sécurité, ledit montant (3) étant solidarisé par un tube (7) au tube concentrique (2), dans sa partie libre en rotation, sur une extrêmité (6) de sa zône déformable (4), l'extrêmité opposée (5) de cette zône déformable (4) du tube (2) étant rendue solidaire de la barre centrale (1) assurant le blocage en rotation et la déformation en torsion par vrillage de la zône déformable (4), au delà d'une première déformation élastique limitée de la barre centrale (1), en amortissement progressif des efforts transmis par le montant (3) au tube concentrique (2).

7. Structure de sécurité de siège de véhicule automobile suivant les revendications 1, 2, 3, 4 et 6, **caractérisée en ce que** le tube concentrique (2) supportant la structure du dossier (3, 3 a) est monté libre en rotation, centré sur une extrêmité par une rondelle (If) et sur l'autre extrêmité par une commande (22) de règlage d'inclinaison, la rotation de cette commande (22) équipée de rampes hélicoïdales (23) engrenées dans les rampes correspondantes de la bague de poussée (24) provoquera le déplacement axial de cette bague (24) et le déplacement axial correspondant de la noix de règlage (10a, 10b) bloquée en rotation par des cannelures externes (1e) sur la barre (1), dégageant ainsi sa denture externe des taquets (21) d'appui du tube (2), permettant la rotation de celui-ci et l'inclinaison de la structure de dossier (3) qui lui est solidaire, un ressort d'appui (27) sur la noix (10a) assurera le contact d'empilage des pièces annulaires (10a, 10b, 26, 25, 24) du mécanisme.

8. Structure de sécurité de siège de véhicule automobile suivant les revendications 1, 2, 3, 4, 5, 6, et 7, **caractérisée en ce que** le tube (2) concentrique de la barre centrale (1), prévu indéformable, sauf pour une légère déformation élastique en torsion, sa seule partie (4) rendue volontairement déformable de façon programmée par un traitement thermique approprié à épaisseur variable, il est prévu sur la barre (1) une zône de plastification (1c), d'une raideur inférieure à celle de la partie déformable (4) du tube concentrique (2) amortissant le choc avant, le choc arrière et le choc bagages étant moins importants que le choc avant.

9. Structure de sécurité de siège de véhicule automobile suivant les revendications 1, 2, 3, 4, 6, 7 et 8 **caractérisée en ce que** la barre (1) a ses extrêmités (1a, 1b) de forme hexagonale, une extrêmité (1b) étant en cas de choc libre en rotation dans le palier (9) dans la limite des butées avant et arrière, mais étant maintenue angulairement dans sa position de référence d'assemblage par rapport à ces butées par un six pans déformable situé dans leur prolongement et s'emboîtant serré sur le six pans de la barre et étant prévu pour s'écraser et laisser l'extrêmité (1b) venir en butée avant ou arrière.

10. Structure de sécurité de siège de véhicule automobile suivant les revendications 1, 2, 3, 4, 6, 7, 8 et 9, **caractérisée en ce que**, pour permettre le montage du sous-ensemble constitué par la barre (1) équipé de toutes les pièces constituant le mécanisme, et notamment les deux noix (10a, 10b), à l'intérieur du tube (2), les nervures de la noix (10b) auront une largeur maximale permettant leur passage entre les taquets assurant le blocage de la noix (10a).

11. Structure de sécurité de siège de véhicule automobile suivant les revendications 1, 2, 3, 4, 6, 7, 9 et 10, **caractérisée en ce que** le mécanisme reporte la totalité de l'effort, avec une élasticité minimale de la barre (1), uniquement sur le palier fixe (8), à l'opposé de la commande (22) par la noix (10), dont les flancs (102, 104) des nervures seront obliques, un rebouchage (105) étant fait entre deux flancs (102,104) en vis-à-vis de deux nervures et la noix étant fendue à 180°, (106) afin de permettre sa déformation élastique, la partie intérieure cannelée (107) engrenant sur les cannelures (1e) de la barre (1) étant ovalisée afin d'assurer de façon prioritaire la portée des cannelures (108, 109) pour qu'elles soient en permanence sans jeu en contact sur les cannelures (1e) de la barre (1), les flancs (102, 104) obliques, d'au moins les deux premières nervures situées de part et d'autre de la fente (106), étant épaissis de façon à ce que leurs portées obliques en opposition exercent un effort de coincement de la noix (10) sur la barre (1) et les rendent prioritaires par rapport aux autres nervures afin d'assurer le resserrement de la noix (10) sur la barre (1) tout en annulant le jeu sur le tube (2).

12. Structure de sécurité de siège de véhicule automobile suivant les revendications 1, 2, 3, 4, 6, 7, 8, 9 10 et 11, **caractérisée en ce qu'**un mécanisme à règlage discontinu pour un siège à deux places dénommé banquette 2/3, est incorporé dans un tube (2) de diamètre constant comporte une seule commande pour les deux sièges avec deux fonctions d'amortissement totalement indépendantes correspondant à deux zônes de plastification (1c) à chaque extrêmité de la barre (1) et protègeant chaque siège séparément, le siège central (7A) renvoyant les efforts sur son palier (8) situé au centre du véhicule, le siège latéral (7B) renvoyant les efforts sur son palier (8a) situé en bordure du véhicule du côté de la commande de règlage (22).

13. Structure de sécurité de siège de véhicule automobile suivant la revendication 12, **caractérisée en ce que** le tube (2) étant constitué d'une seule pièce, l'effort sur un seul siège sera retransmis aux deux paliers (8, 8a) par l'intermédiaire de deux zônes de plastification (1c) faites pour la protection de deux passagers, la fonction d'amortissement indépendante pour chaque siège étant obtenue en séparant le tube (2) en deux tronçons reliés par une saignée d'affaiblissement (22) ayant pour but de se rompre afin de permettre à l'un ou l'autre des tronçons de pivoter si un seul siège est occupé, chacun des tronçons correspondants de la barre (1) pourront pivoter et plastifier de façon indépendante sans être retenu par la zône de plastification de l'autre tronçon, la barre (1) étant divisée en deux tronçons raccordés par une rotule (1g), un manchon de soutien (25) centré sous la saignée d'affaiblissement (22) du tube (2) assurant une liaison radiale avec la barre (1).

14. Structure de sécurité de siège de véhicule automobile suivant les revendications 12 et 13, **caractérisée en ce que** deux parties (4) déformables par vrillage assurant l'absorption d'énergie du choc arrière et du choc bagages des sièges 8A et 8B sont disposées sur le tube (2), une barre centrale (1) rigide en une seule pièce renvoyant indifféremment l'effort d'amortissement de l'un ou l'autre des deux sièges simultanément sur les deux paliers, le tube (2) étant divisé en deux tronçons séparés par une saignée d'affaiblissement (22) afin d'assurer l'indépendance d'amortissement des deux sièges.

15. Structure de sécurité de siège de véhicule automobile suivant les revendications 12, 13 et 14, **caractérisée en ce que** le siège central (9A) est équipé d'une poutre (3) recevant le 3ème point d'attache embarqué d'une ceinture de sécurité, le tube (2) étant formé de deux tronçons se séparant en cas d'accident, la barre (1) comportant deux tronçons raccordés par une rotule (1g), les efforts étant renvoyés par le siège (9A) sur son palier (8) et le siège (9B) sur son palier (8a), le tronçon de la barre (1) supportant le dossier du siège (9A) étant équipé d'une noix (10b) placée à l'aplomb de la poutre (3) pour renvoyer directement de façon radiale l'effort à la barre (1), le complément de résistance nécessaire étant assuré par la noix (10a) pour supporter l'attache du 3ème point embarqué sur la poutre (3).

16. Structure de sécurité de siège de véhicule automobile suivant les revendications 12, 13, 14 et 15, **caractérisée en ce que** la partie déformable (1c) assurant la protection du choc avant, beaucoup plus important que le choc arrière ou le choc bagages, afin d'assurer l'indépendance d'amortissement des différents chocs est composée de deux zônes de plastification (1c/a, 1c/b) accolées bout à bout et prévues chacune pour absorber de façon différenciée l'énergie correspondante à chaque type de choc concerné, pour le choc arrière, les flancs (11c) des rampes hélicoïdales prennent appui sur des nervures (1d) contrôlant la plastification de la zône (1c/a) jusqu'à la fin de course assurée par la mise en appui d'une butée (11a) sur la nervure 1d, pour le choc bagages, les flancs (11d) des rampes hélicoïdales prennent appui sur des nervures (1d) contrôlant la plastification de la zône (1c/a) jusqu'à la fin de course assurée par la zône (1c/b) plus résistante, pour le choc avant, beaucoup plus important que le choc bagages, la montée en charge progressive sera assurée par la zône de plastification (1c/a) du choc bagages, qui sera ensuite neutralisée par des nervures (1d), permettant la plastification de la zône (1c/b), jusqu'à la fin de course assurée par la butée (11b).

17. Structure de sécurité de siège de véhicule automobile suivant les revendications 1, 2, 3, 4, 6, 7, 8, 9, 10, 11, 13, 14, 15 et 16 **caractérisée en ce que** la fixation de la poutre (3) sur le tube (2) sera assurée par un étrier (3b) épousant la forme du tube et soudé sur 180° à l'opposé de la poutre (3), les deux bras de l'étrier remontant le long de la poutre étant soudés sur les angles, la forme des bras étant aménagée de façon débordante sur au moins un côté de la poutre de façon à augmenter la rigidité latérale.

18. Structure de sécurité de siège de véhicule automobile suivant les revendications 1, 12, 13, 14, 15, 16 et 17, **caractérisée en ce que** deux parties (4) déformables par vrillage assurant l'une l'absorption d'énergie du choc avant du siège (10A) et l'autre l'absorption d'énergie du choc arrière et du choc bagages du siège (10B), sont disposées sur le tube (2), une barre centrale (1) rigide et en une seule pièce renvoyant indifféremment l'effort d'amortissement de l'un ou l'autre des deux sièges simultanément sur les deux paliers, le tube (2) étant divisé en deux tronçons séparés par une saignée d'affaiblissement (22) afin d'assurer l'indépendance d'amortissement des deux sièges, l'absorption d'énergie du choc arrière et du choc bagages du siège (10A) étant faite par la zône de plastification (1c) de la barre (1).

19. Structure de sécurité de siège de véhicule automobile suivant les revendications 2, 7, 8, 9, 10, 11 et 16, **caractérisée en ce que** le mécanisme de règlage continu comprend deux noix (12, 12a) maintenues écartées par un élément élastique (12c) et retenues en écartement par la tête de deux goujons (12b) et la face (12d1) d'une vis tubulaire (12d) commandée en translation par l'écrou (12e) entraîné en rotation par la commande radiale (22), les noix (12, 12a) ayant chacune deux nervures hélicoïdales plus larges disposées à 180° et dont les flancs portent de façon prioritaire sur les flancs des deux rampes hélicoïdales (29) du tube (2).

20. Structure de sécurité de siège de véhicule automobile suivant les revendications 1, 2, 3 et 4 **caractérisée en ce qu'**un règlage d'inclinaison de dossier est assuré par un mécanisme de règlage (81, 83, 84) solidaire des extrêmités de la barre centrale (1) et pivotant, lors des changements de règlage d'inclinaison du dossier, dans des paliers (82) aménagés dans la structure (8) de l'assise du siège et centrés sur l'axe de la barre centrale formant l'axe de pivotement du dossier, une platine circulaire (81) montée libre en rotation dans un palier fixe (82) fixé au flanc d'assise de siège (8), la périphérie de la platine (81) comportant des encoches (85) dont le blocage par un cliquet de verrouillage (84) correspondra aux différentes positions d'inclinaison prévues pour le dossier du siège, une protection (89) contre les chocs de bagages étant prévue dans le même plan et la même épaisseur que la platine (81), articulée en butée vers l'avant et escamotable vers l'arrière pour permettre les différents règlages d'inclinaison de dossier.

21. Structure de sécurité de siège de véhicule automobile suivant les revendications 1, 2, 3, 4, 6, 7, 8, 10, 11, 13, 14, 15, 16, 18 et 19, **caractérisée en ce que** des taquets (37) immobilisent en rotation le tube (2) sur la barre (1) par l'intermédiaire de noix (10) et qu'un manchon (7), solidaire du tube (2) par des cannelures (38), entraîne en rotation les rampes hélicoïdales (34) qu'il supporte sur sa face interne et qui se mettent en appui sur les nervures (36) du tube (2), s'étendant de l'extrêmité (36a) des cannelures (38) à l'extrêmité (36b) des butées (35), de façon à contrôler la plastification à raideur progressive de la zône déformable (4), retenue en (5) et entraînée en rotation en (6) jusqu'à la mise en appui sur les nervures (36) des butées (35) de fin de course, les butées (35) étant à l'aplomb des taquets (37) pour reporter l'effort radialement sur la barre.

22. Structure de sécurité de siège de véhicule automobile suivant les revendications 2, 7, 10, 11, 16, 19 et 21, **caractérisée en ce que** le déplacement angulairede la commande rotative (22) est limité par des butées angulaires (23a) et le positionnement axial de la bague de poussée (24), défini par les butées axiales (23b), assure le verrouillage de la noix (10) dans les taquets (21), un ressort de rappel (22a) maintenant en appui les butées angulaires (23a), un élément élastique (1h) assurant la mise en contact des flancs des nervures de la noix (10) sur ceux des taquets (21), une rondelle (28c) servant d'appui au ressort (27), la poussée du ressort de rappel de la commande (22) étant plus importante que celle du ressort (27) en appui sur la bague (10).

23. Structure de sécurité de siège de véhicule automobile suivant les revendications 1, 2, 3, 4, 6, 7, 10, 11, 12, 13, 14, 20, 21 et 22 **caractérisée en ce qu'**un mécanisme de règlage discontinu d'inclinaison de dossier de siège, associé concentriquement sur la même barre (1) à un mécanisme de règlage continu, comporte un tube d'accouplement (200) reliant les noix des deux mécanismes, le couple de rotation exercé par le tube (2) étant successivement retransmis aux noix d'un premier mécanisme, au tube d'accouplement (200),et aux noix du deuxième mécanisme, immobilisées en rotation sur la barre (1), au moins un moyen d'absorption d'énergie (4) étant intercalé entre les bras (3) du dossier et les paliers (8) de fixation de la barre (1), soit sur le tube (2), soit sur le tube d'accouplement (200), soit sur la barre (1).

24. Structure de sécurité de siège de véhicule automobile suivant les revendications 1, 4, 6, 7, 9, 12, 13, 14, 15, 17, 18, 20 et 23, **caractérisée en ce qu'**une pièce rapportée, fixée en extrêmité du mécanisme, est munie d'un bras déclencheur entraîné en rotation sous l'action d'un choc ayant déclenché la rotation du mécanisme, assurant le déclenchement de dispositifs auxiliaires de protection.

25. Structure de sécurité de siège de véhicule automobile suivant les revendications 1, 4, 6, 7, 9, 12, 13, 14, 15, 17, 18, 20, 23 et 24, **caractérisée en ce qu'**un dossier de siège à colonne unique axiale (3), à règlage télescopique de hauteur et surmontées d'une armature d'appui-tête recevant l'attache haute d'une ceinture de sécurité est rendu solidaire du mécanisme par fixation au milieu de la barre tubulaire concentrique (2).
